# EUROPEAN PATENT APPLICATION

(11) **EP 3 733 281 A1**
(43) Date of publication of application: **04.11.2020**
(21) Application number: 18895622.1
(22) Date of filing: 28.12.2018
(51) Int. Cl.: B01J 20/32, B01J 20/28, B01J 20/18, B01D 53/04

(54) **HYDROCARBON REMOVAL SYSTEM**

(30) Priority: 29.12.2017 KR 20170183959; 24.12.2018 WO PCT/KR2018/016590
(71) Applicant: HYUNDAI MOTOR COMPANY, Seoul 06797 (KR); Korea University Research and Business Foundation, Seoul 02841 (KR); Kia Motors Corporation, Seoul 06797 (KR)
(72) Inventor: KANG, Chun Yong, Yongin-si, Gyeonggi-do 17084 (KR); KIM, Chang Hwan, Seongnam-si Gyeonggi-do 13526 (KR); CHOI, Jungkyu, Seoul 02874 (KR); JANG, Eun-Hee, Seoul 02857 (KR)
(74) Representative: Viering, Jentschura & Partner mbB Patent- und Rechtsanwälte
(86) International application number: PCT/KR2018/016906
(87) International publication number: WO 2019/132612

(57) **Abstract**

A hydrocarbon removal system according an embodiment of the present invention includes: a first area including a first hydrocarbon adsorption catalyst having a first pore size; and a second area including a second hydrocarbon adsorption catalyst having a second pore size, wherein the first pore size may be smaller than the second pore size, the first hydrocarbon adsorption catalyst may include CHA zeolite, and the second hydrocarbon adsorption catalyst may include ZSM-5 zeolite.

## Description

### TECHNICAL FIELD

### Cross-reference to related application(s)

This application claims priority to and the benefit of Korean Patent Application No. 10-2017-0183959 filed in the Korean Intellectual Property Office on December 29, 2017, and International Patent Application No. PCT/KR2018/016590 filed in the World Intellectual Property Organization on December 24, 2018, the entire contents of which are incorporated herein by reference.

The present invention relates to a hydrocarbon removal system using a catalyst for hydrocarbon removal.

### BACKGROUND

As interest in air pollution increases, regulations for a vehicle's exhaust gas such as CO, NOx, HC (hydrocarbons), and PM (particulate matter) in countries such as the United States and Europe are being strengthened. Among them, the HC is mostly oxidized by three-way catalysts (TWCs), and the three-way catalysts are activated at a temperature of about 200 to 300 °C or higher, and thus, in a cold start section in which the three-way catalysts are not activated, HC corresponding to 50 to 80 % of total HC emission is emitted. In order to reduce the HC emission, studies on a hydrocarbon adsorbent (HC trap) are being conducted. The hydrocarbon adsorbent is a device that adsorbs HC emitted in the cold start section, and desorbs the HC when the three-way catalyst becomes activated at a temperature of 200 to 300 °C.

As a hydrocarbon adsorbent, zeolite having high physical and chemical stability have been much studied. Performance of the hydrocarbon adsorbent is tested by measuring adsorption/desorption of propene and toluene, which are typical HC emission materials. Studies on the performance of the hydrocarbon adsorbent according to a zeolite structure, a Si/Al ratio, and whether or not metal impregnation is performed, have been conducted.

### SUMMARY OF THE INVENTION

### Technical Problem

The present invention has been made in an effort to provide a hydrocarbon removal system that may effectively adsorb hydrocarbons by suppressing slip of hydrocarbons having a small number of carbon atoms.

### Technical Solution

An exemplary embodiment of the present invention provides a hydrocarbon removal system, including: a first area including a first hydrocarbon adsorption catalyst having a first pore size; and a second area including a second hydrocarbon adsorption catalyst having a second pore size. The first pore size may be smaller than the second pore size, the first hydrocarbon adsorption catalyst may include CHA zeolite, and the second hydrocarbon adsorption catalyst may include ZSM-5 zeolite.

The pore size of the first hydrocarbon adsorption catalyst may be 3.0 Å to 4.4 Å.

The pore size of the second hydrocarbon adsorption catalyst may be 4.5 Å to 9.0 Å.

A weight ratio of the first hydrocarbon adsorption catalyst and the second hydrocarbon adsorption catalyst in the hydrocarbon removal system may be 1:9 to 5:5.

Another exemplary embodiment of the present invention provides a hydrocarbon removal system, including: a first hydrocarbon adsorption catalyst having a first pore size and a second hydrocarbon adsorption catalyst having a second pore size. The first hydrocarbon adsorption catalyst and the second hydrocarbon adsorption catalyst may be mixed, the first pore size may be smaller than the second pore size, the first hydrocarbon adsorption catalyst may include CHA zeolite, and the second hydrocarbon adsorption catalyst may include ZSM-5 zeolite.

The pore size of the first hydrocarbon adsorption catalyst may be 3.5 Å to 4.5 Å.

The pore size of the second hydrocarbon adsorption catalyst may be 4.5 Å to 9.0 Å.

A mixed weight ratio of the first hydrocarbon adsorption catalyst and the second hydrocarbon adsorption catalyst may be 1:9 to 5:5.

### Advantageous Effects

As described above, it is possible to provide a hydrocarbon removal system that may effectively adsorb hydrocarbons by suppressing slip of hydrocarbons having a small number of carbon atoms.

### BRIEF DESCRIPTION OF THE DRAWINGS

FIG. 1 illustrates a hydrocarbon removal system according to an exemplary embodiment of the present invention.
FIG. 2 illustrates a configuration for purifying exhaust gas of a gasoline vehicle with a three-way catalyst.
FIG. 3 illustrates a ratio of hydrocarbons that are not adsorbed in a hydrocarbon adsorbent.
FIG. 4 schematically illustrates a hydrocarbon removal system according to an exemplary embodiment.
FIG. 5 illustrates a hydrocarbon removal system according to another exemplary embodiment.
FIG. 6 illustrates a test temperature of an adsorption and desorption evaluation test, and FIG. 7 illustrates a specific experimental condition.
FIG. 8 illustrates an evaluation result according to Experimental Example 1.
FIG. 9 illustrates an evaluation result according to Experimental Example 2.

### DETAILED DESCRIPTION

The present invention will be described more fully hereinafter with reference to the accompanying drawings, in which an embodiment of the invention is shown. As those skilled in the art would realize, the described embodiments may be modified in various different ways, all without departing from the spirit or scope of the present invention.

A hydrocarbon removal system according to an exemplary embodiment of the present invention will now be described in detail with reference to the drawings.

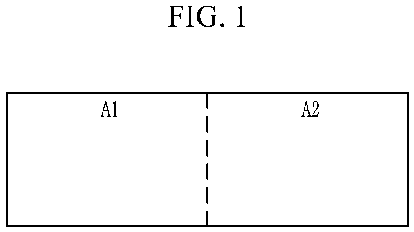

FIG. 1 illustrates a hydrocarbon removal system according to an exemplary embodiment of the present invention. Referring to FIG. 1, the hydrocarbon removal system according to this exemplary embodiment includes a first area A1 including a first hydrocarbon adsorption catalyst having a first pore size and a second area A2 including a second hydrocarbon adsorption catalyst having a second pore size, and the first pore size is smaller than the second pore size. For example, the first hydrocarbon adsorption catalyst may include CHA zeolite, and the second hydrocarbon adsorption catalyst may include ZSM-5 zeolite.

The hydrocarbon removal system according to the present embodiment will now be described in more detail.

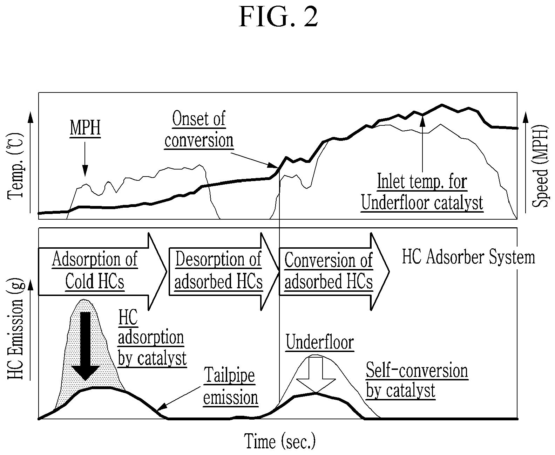

FIG. 2 illustrates a configuration of purifying exhaust gas of a gasoline vehicle with a three-way catalyst. Referring to FIG. 2, exhaust gas of a gasoline vehicle is purified by a three-way catalyst, and when a temperature of the catalyst is 400 °C or greater, the catalyst has a purification performance of about 100 %. However, in a cold-start section immediately after an engine starts, the three-way catalyst may not be normally operated, thus the exhaust gas is not purified and is discharged into the atmosphere. Particularly, it is known that about 70 % of the hydrocarbons are discharged in the cold start section.

However, in this exemplary embodiment, since the zeolite-based hydrocarbon adsorbent is introduced into the exhaust gas system, until a warm-up operation of the three-way catalyst is completed, the hydrocarbons discharged in the cold start section are adsorbed by the hydrocarbon adsorbent, and then, when the hydrocarbons are desorbed from the hydrocarbon adsorbent at the end of the warm-up of the three-way catalyst, it may be purified through the three-way catalyst.

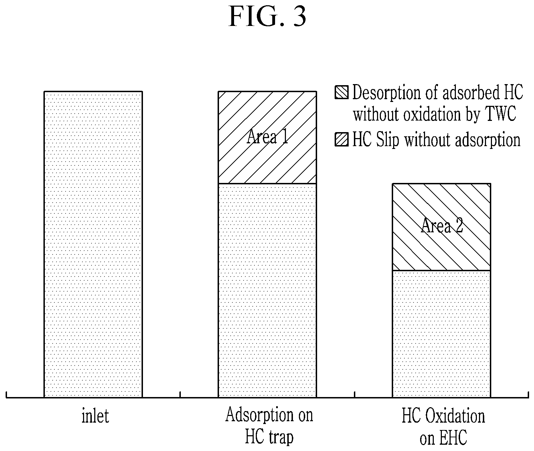

During this process, hydrocarbons (C₁Hₓ to C₅H_{y}) with a small number of carbon atoms that are not adsorbed by the hydrocarbon adsorbent and are emitted at the same time as the engine starts, occupy about 30 % of a total of tail pipe hydrocarbon emission (T/P HC EM). This is illustrated in FIG. 3. That is, the hydrocarbons with a small number of carbon atoms are not absorbed but are quickly discharged, and in order to respond to strengthened exhaust regulations in the future, it is urgent to improve purification performance for the hydrocarbons with the small number of carbon atoms.

Therefore, the present invention includes a configuration to delay emission of hydrocarbons having a small number of carbon atoms until a time point of activation of a three-way catalyst (TWC) at a temperature of about 350 °C at which the hydrocarbons may be purified for purification of the hydrocarbons having the small number of carbon atoms that are difficult to chemically adsorb by a hydrocarbon adsorbent.

That is, in the present invention, by mixing and using hydrocarbon removal catalysts having different pore sizes, a problem that hydrocarbons with a small number of carbon atoms rapidly exit a hydrocarbon removal system and thus are not adsorbed therein is solved. In this case, the first hydrocarbon adsorption catalyst having a small pore size delays flow of hydrocarbons having 5 or less carbon atoms, so that the hydrocarbons having 5 or less carbon atoms are effectively adsorbed.

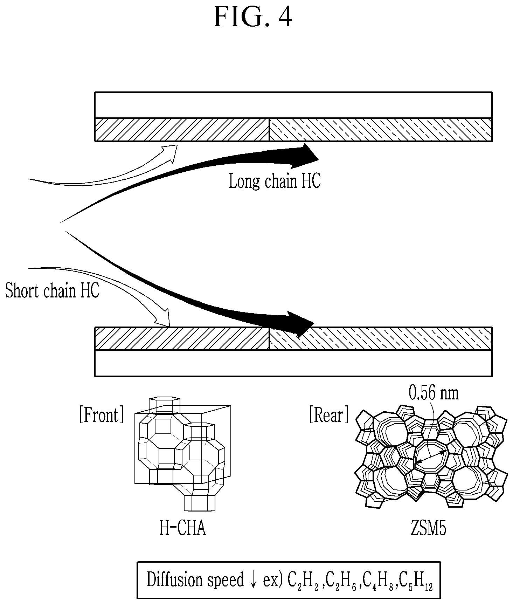

FIG. 4 schematically illustrates a hydrocarbon removal system according to an exemplary embodiment. Referring to FIG. 4, zeolite such as CHA having a narrow pore size traps hydrocarbons having a small number of carbon atoms. Thus, the hydrocarbons having the small number of carbon atoms, for example a diffusion speed of C₂H₂, C₂H₆, C₄H₈, and C₅H₁₂, is reduced. In addition, zeolite such as ZSM-5 with a large pore size on a rear surface traps long chain hydrocarbons (hydrocarbons with a large number of carbon atoms).

That is, in order to reduce emission of hydrocarbons (C₁Hₓ to C₅H_{y}) having a small number of carbon atoms that are discharged without being adsorbed to the hydrocarbon adsorbent during an initial cold start, the present invention includes a hydrocarbon adsorption catalyst having a pore size corresponding to a size of hydrocarbons that would slip. Therefore, by zone-coating or mixing two or more hydrocarbon adsorption catalysts having different pores to arrange and use them in a 1 to 2 layered structure and thus delaying diffusion of hydrocarbons (C₁Hₓ to C₅H_{y}) having a physically small number of carbon atoms, it is possible to improve hydrocarbon emission in a cold start section by oxidizing them with a three-way catalyst (TWC) activated by an electrically heated catalyst (EHC).

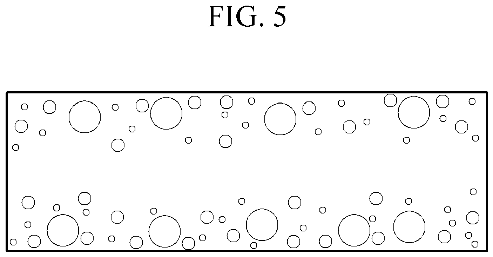

FIG. 1 illustrates a configuration in which the first area and the second area are separated from each other, but referring to FIG. 5, the first hydrocarbon adsorption catalyst having the first pore size and the second hydrocarbon adsorption catalyst having the second pore size are mixed with each other, thereby evenly positioning them. Even in this case, the diffusion of the hydrocarbons having the small number of carbon atoms may be suppressed as in FIG. 1. In FIG. 5, the hydrocarbon adsorption catalyst having a large pore size and the hydrocarbon adsorption catalyst having a small pore size are shown with different sizes.

A ratio of weights of the first hydrocarbon adsorption catalyst and the second hydrocarbon adsorption catalyst in the hydrocarbon removal system of the present invention may be 1:9 to 5:5. That is, the ratio of the weights (g/L) of the hydrocarbon adsorption catalysts coated on the same area, that is, the ratio of the first hydrocarbon adsorption catalyst: the second hydrocarbon adsorption catalyst, may be 1:9 to 5:5, which is a range of mixing ratio that may effectively suppress the slip of hydrocarbons having a small number of carbon atoms. Effects of these ratios will be described later through experimental examples.

Hereinafter, a hydrocarbon removal system according to an embodiment of the present invention will be described in detail through specific experimental examples.

### Experimental Example 1: Evaluation of adsorption and desorption performance

The zeolite used in the present invention was prepared by calcining NH4-form Zeolite at 550 °C for 12 hours in the ambient atmosphere. The adsorption/desorption evaluation of the hydrocarbon adsorbent was performed by filling 60 mg of powdered H-CHA/ZSM-5 zeolite in a reaction tube after tandem mixing; after pre-treating it for 30 minutes at a temperature of 600 °C under He flow, adsorbing it under flow of a mixed gas of C₃H₆, C₇H₈, O₂, and a carrier gas Ar/He for 5 minutes at a temperature of 70 °C; and then increasing a temperature at a heating speed of 53 °C/min.

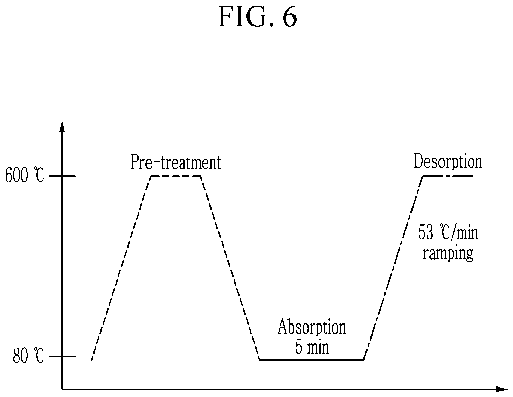

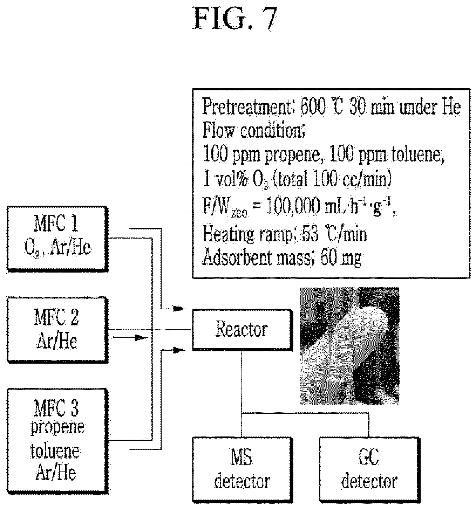

FIG. 6 illustrates a test temperature of an adsorption and desorption evaluation test, and FIG. 7 illustrates a specific experimental condition.

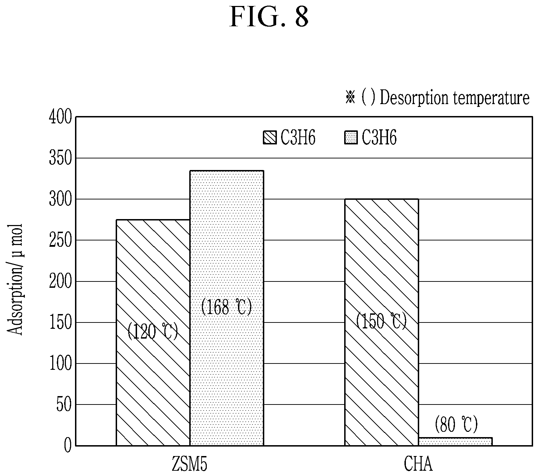

FIG. 8 illustrates the evaluation results according to the present experiment.

Referring to FIG. 8, the C₃H₆ hydrocarbon provided better adsorption performance in a CHA zeolite. A pore size of the CHA zeolite is 3.8 Å*4.2 Å, which is smaller than that of ZSM-5 zeolite (diameter 5.6 Å). Since a molecular size of C₃H₆ to be adsorbed was 4.5 Å, which was smaller than the pore size of the ZSM-5 and similar to the pore size of the CHA, it was confirmed that the CHA provided better adsorption performance.

In contrast, since C₇H₈ had a molecular size (5.85 Å) that was difficult to pass through the pore of the CHA, it was confirmed that it was hardly adsorbed to the CHA. However, in ZSM-5 having a similar size thereto, it can be seen that high adsorption performance for C₇H₈ was provided and the desorption temperature was high.

### Experimental Example 2: Effect according to mixing ratio

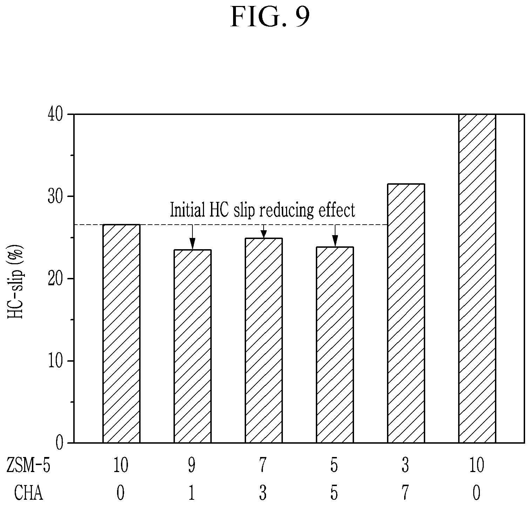

A slip degree of hydrocarbons was measured while varying the mixing ratio of the hydrocarbon adsorbent adsorbing a hydrocarbon having a large number of carbon atoms and the hydrocarbon adsorbent adsorbing a hydrocarbon having a small number of carbon atoms, and this is illustrated in FIG. 9. Referring to FIG. 9, when a mixed weight ratio of the hydrocarbon adsorbent adsorbing the hydrocarbon having the large number of carbon atoms: the hydrocarbon adsorbent adsorbing the hydrocarbon having the small number of carbon atoms was 9:1 to 5:5, it can be conformed that a highest initial hydrocarbon slip reduction effect was obtained.

While this invention has been described in connection with what is presently considered to be practical embodiments, it is to be understood that the invention is not limited to the disclosed embodiments, but, on the contrary, is intended to cover various modifications and equivalent arrangements included within the spirit and scope of the appended claims.

## Claims

1. A hydrocarbon removal system, comprising:
a first area comprising a first hydrocarbon adsorption catalyst having a first pore size; and
a second area comprising a second hydrocarbon adsorption catalyst having a second pore size,
wherein the first pore size is smaller than the second pore size,
the first hydrocarbon adsorption catalyst comprises CHA zeolite, and
the second hydrocarbon adsorption catalyst comprises ZSM-5 zeolite.

2. The hydrocarbon removal system of claim 1, wherein
the pore size of the first hydrocarbon adsorption catalyst is 3.5 Å to 4.4 Å.

3. The hydrocarbon removal system of claim 1, wherein
the pore size of the second hydrocarbon adsorption catalyst is 4.5 Å to 9.0 Å.

4. The hydrocarbon removal system of claim 1, wherein
a weight ratio of the first hydrocarbon adsorption catalyst and the second hydrocarbon adsorption catalyst in the hydrocarbon removal system is 1:9 to 5:5.

5. A hydrocarbon removal system, comprising:
a first hydrocarbon adsorption catalyst having a first pore size and a second hydrocarbon adsorption catalyst having a second pore size, wherein the first hydrocarbon adsorption catalyst and the second hydrocarbon adsorption catalyst are mixed;
the first pore size is smaller than the second pore size;
the first hydrocarbon adsorption catalyst includes CHA zeolite; and
the second hydrocarbon adsorption catalyst includes ZSM-5 zeolite.

6. The hydrocarbon removal system of claim 5, wherein
the pore size of the first hydrocarbon adsorption catalyst is 3.5 Å to 4.5 Å.

7. The hydrocarbon removal system of claim 5, wherein
the pore size of the second hydrocarbon adsorption catalyst is 4.5 Å to 9.0 Å.

8. The hydrocarbon removal system of claim 5, wherein
a mixed weight ratio of the first hydrocarbon adsorption catalyst and the second hydrocarbon adsorption catalyst is 1:9 to 5:5.
